# EUROPEAN PATENT APPLICATION

(11) **EP 2 778 470 A1**
(43) Date of publication of application: **17.09.2014**
(21) Application number: 14159776.5
(22) Date of filing: 14.03.2014
(51) Int. Cl.: F16H 3/00, B62M 11/00

(54) **Bidirectional input unidirectional output driven vehicle having clutch device at load end**

(30) Priority: 15.03.2013 US 201313834079
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention is provided with a manual input device capable of bidirectional inputting, the output end thereof is served to output to the input end of a bidirectional input unidirectional output transmission device, the output end of the bidirectional input unidirectional output transmission device performs output in a constant rotating direction, so a loading wheel set can be driven through an engaging or releasing operational clutch device (70), and when the loading wheel set performs reverse driving in the opposite rotating direction for the purpose of reverse linking, the load is released by the engaging or releasing operational clutch device (70), thereby preventing the transmission wheel system of the bidirectional input unidirectional output driven vehicle having clutch device at load end from being locked.

## Description

### BACKGROUND OF THE INVENTION

### (a) Field of the invention

The present invention provides a bidirectional input unidirectional output driven vehicle having clutch device at load end, in which the input end of a manual input device is driven by human's feet in dual rotating direction defined as a normal and a reverse direction, then the kinetic energy is transferred from the output end of the manual input device to the input end of a bidirectional input unidirectional output transmission device, then outputted from the output end of the bidirectional input unidirectional output transmission device in a constant rotating direction, thereby driving a loading wheel set through an engaging or releasing operational clutch device (70), and when the loading wheel set performs reverse driving in the opposite rotating direction for the purpose of reverse linking, the load is released by the engaging or releasing operational clutch device (70), thereby preventing the transmission wheel system of the bidirectional input unidirectional output driven vehicle having clutch device at load end from being locked.

The present invention is applicable in a treadle-drive vehicle, or a hybrid vehicle driven by electric and treadles, or a movement-assisting vehicle driven by electric and treadles, especially applicable in a bicycle capable of being bidirectionally treadled and unidirectionally driven.

### (b) Description of the Prior Art

It is known that a bicycle rider applies forces for treadling in a constant direction, and relative muscles and joints are constantly used along with the treadling period, in other words, a part of the muscles and joints of the rider are in a constant force-applying and force-receiving state while other muscles and joints are not in the same constant force-applying and force-receiving state, such condition is not a good balance in terms of the whole loading to a human's body, so the rider may feel tired easily or sport injury may be caused due to the long term treadling; however, a conventional bidirectional input unidirectional output device has a feature of nonreversible transmission, one major disadvantage is that the transmission wheel system would be locked while the bicycle being reversely moved.

### SUMMARY OF THE INVENTION

The present invention provides a bidirectional input unidirectional output driven vehicle having clutch device at load end, in which a manual input device capable of bidirectional inputting is installed, the output end thereof is served to output to the input end of a bidirectional input unidirectional output transmission device, the output end of the bidirectional input unidirectional output transmission device performs output in a constant rotating direction, so a loading wheel set can be driven through an engaging or releasing operational clutch device (70), the rider is allowed to select the input direction of driving, so in the different driving input direction, the output in a constant rotating direction with the same or different speed ratios can be served to drive the loading wheel set, and when the loading wheel set performs reverse driving in the opposite rotating direction for the purpose of reverse linking, the load is released by the engaging or releasing operational clutch device (70), thereby preventing the transmission wheel system of the bidirectional input unidirectional output driven vehicle having clutch device at load end from being locked.

### BRIEF DESCRIPTION OF THE DRAWINGS

FIG.1 is a block schematic view showing the basic configuration of the bidirectional input unidirectional output driven vehicle having clutch device at load end according to the present invention.
FIG 2 is a block schematic view of a driving device illustrating a front transmission device (12) being additionally installed between the manual input device (11) and the bidirectional input unidirectional output transmission device (13) shown in FIG 1.
FIG 3 is a block schematic view of a driving device illustrating the output end of the bidirectional input unidirectional output transmission device (13) shown in FIG 1 being additionally installed with a rear transmission device (14) and subsequently installed with an engaging or releasing operational clutch device (70) so as to drive the loading wheel set (15).
FIG 4 is a block schematic view of a driving device illustrating the output end of the bidirectional input unidirectional output transmission device (13) shown in FIG 1 being additionally installed with the engaging or releasing operational clutch device (70) then subsequently installed with the rear transmission device (14) so as to drive the loading wheel set (15).
FIG 5 is a block schematic view of a driving device illustrating the front transmission device (12) being additionally installed between the manual input device (11) and the bidirectional input unidirectional output transmission device (13) shown in FIG 3.
FIG 6 is a block schematic view of a driving device illustrating the front transmission device (12) being additionally installed between the manual input device (11) and the bidirectional input unidirectional output transmission device (13) shown in FIG 4.
FIG 7 is a block schematic view of a driving device illustrating a unidirectional transmission device (80) being additionally installed between the output end of the bidirectional input unidirectional output transmission device (13) and the input end of the engaging or releasing operational clutch device (70) shown in FIG. 1.
FIG 8 is a block schematic view of a driving device illustrating a unidirectional transmission device (80) being additionally installed between the output end of the bidirectional input unidirectional output transmission device (13) and the input end of the engaging or releasing operational clutch device (70) shown in FIG 2.
FIG 9 is a block schematic view of a driving device illustrating a unidirectional transmission device (80) being additionally installed between the output end of the rear transmission device (14) and the input end of the engaging or releasing operational clutch device (70) shown in FIG 3.
FIG 10 is a block schematic view of a driving device illustrating a unidirectional transmission device (80) being additionally installed between the output end of the bidirectional input unidirectional output transmission device (13) and the input end of the engaging or releasing operational clutch device (70) shown in FIG 4.
FIG 11 is a block schematic view of a driving device illustrating a unidirectional transmission device (80) being additionally installed between the output end of the rear transmission device (14) and the input end of the engaging or releasing operational clutch device (70) shown in FIG 5.
FIG 12 is a block schematic view of a driving device illustrating a unidirectional transmission device (80) being additionally installed between the output end of the bidirectional input unidirectional output transmission device (13) and the input end of the engaging or releasing operational clutch device (70) shown in FIG 6.
FIG 13 is a block schematic view of a driving device illustrating a unidirectional transmission device (80) being additionally installed between the output end of the engaging or releasing operational clutch device (70) and the input end of the loading wheel set (15) shown in FIG. 1.
FIG 14 is a block schematic view of a driving device illustrating a unidirectional transmission device (80) being additionally installed between the output end of the engaging or releasing operational clutch device (70) and the input end of the loading wheel set (15) shown in FIG 2.
FIG 15 is a block schematic view of a driving device illustrating a unidirectional transmission device (80) being additionally installed between the output end of the engaging or releasing operational clutch device (70) and the input end of the loading wheel set (15) shown in FIG 3.
FIG 16 is a block schematic view of a driving device illustrating a unidirectional transmission device (80) being additionally installed between the output end of the rear transmission device (14) and the input end of the loading wheel set (15) shown in FIG 4.
FIG 17 is a block schematic view of a driving device illustrating a unidirectional transmission device (80) being additionally installed between the output end of the engaging or releasing operational clutch device (70) and the input end of the loading wheel set (15) shown in FIG 5.
FIG 18 is a block schematic view of a driving device illustrating a unidirectional transmission device (80) being additionally installed between the output end of the rear transmission device (14) and the input end of the loading wheel set (15) shown in FIG 6.

### DESCRIPTION OF MAIN COMPONENT SYMBOLS

11: manual input device
12: front transmission device
13: bidirectional input unidirectional output transmission device
14: rear transmission device
15: loading wheel set
70: engaging or releasing operational clutch device
80: unidirectional transmission device
600: machine body

### DETAILED DESCRIPTION OF THE PREFERRED EMBODIMENTS

The present invention provides a bidirectional input unidirectional output driven vehicle having clutch device at load end, in which the input end of a manual input device is driven by human's feet in dual rotating direction defined as a normal and a reverse direction, then the kinetic energy is transferred from the output end of the manual input device to the input end of a bidirectional input unidirectional output transmission device, then outputted from the output end of the bidirectional input unidirectional output transmission device in a constant rotating direction, thereby driving a loading wheel set through an engaging or releasing operational clutch device (70), and when the loading wheel set performs reverse driving in the opposite rotating direction for the purpose of reverse linking, the load is released by the engaging or releasing operational clutch device (70), thereby preventing the transmission wheel system of the bidirectional input unidirectional output driven vehicle having clutch device at load end from being locked. The present invention is applicable in a treadle-drive vehicle, or a hybrid vehicle driven by electric and treadles, or a movement-assisting vehicle driven by electric and treadles, especially applicable in a bicycle capable of being bidirectionally treadled and unidirectionally driven, thereby being able to expand or change the muscle groups while the lower limbs performing bidirectionally treadling and following advantages can be achieved by the present invention:
(1) Injuries caused by over use of muscles and joints can be reduced;
(2) Muscle groups and joints which are not often used can be used or trained;

The present invention provides a bidirectional input unidirectional output driven vehicle having clutch device at load end, in which a manual input device capable of bidirectional inputting is installed, the output end thereof is served to output to the input end of a bidirectional input unidirectional output transmission device, the output end of the bidirectional input unidirectional output transmission device performs output in a constant rotating direction, so a loading wheel set can be driven through an engaging or releasing operational clutch device (70), the rider is allowed to select the input direction of driving, so in the different driving input direction, the output in a constant rotating direction with the same or different speed ratios can be served to drive the loading wheel set, and when the loading wheel set performs reverse driving in the opposite rotating direction for the purpose of reverse linking, the load is released by the engaging or releasing operational clutch device (70), thereby preventing the transmission wheel system of the bidirectional input unidirectional output driven vehicle having clutch device at load end from being locked.

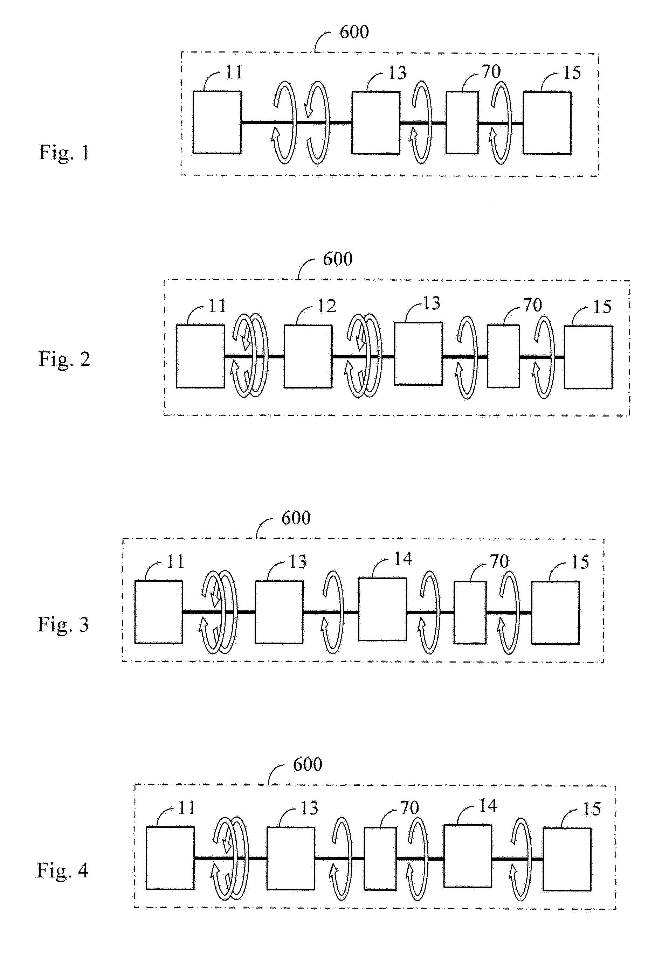

FIG 1 is a block schematic view showing the basic configuration of the bidirectional input unidirectional output driven vehicle having clutch device at load end according to the present invention.

As shown in FIG 1, which is a structural view showing the bidirectional input unidirectional output driven vehicle having clutch device at load end, besides components of a treadle-drive vehicle and a machine body (600), mainly consists of:
- manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- the kinetic energy of the first driving rotating direction and the inputted kinetic energy of the second driving rotating direction are from human's feet for driving the input end of the manual input device (11);
- the first driving rotating direction is opposite to the second driving rotating direction;
- bidirectional input unidirectional output transmission device (13): the bidirectional input unidirectional output transmission device (13) is driven by the kinetic energy in various rotating directions from the manual input device (11) so as to output the kinetic energy in a constant rotating direction, and an engaging or releasing operational clutch device (70) is installed between the output end of the bidirectional input unidirectional output transmission device (13) and the input end of the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;

Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;

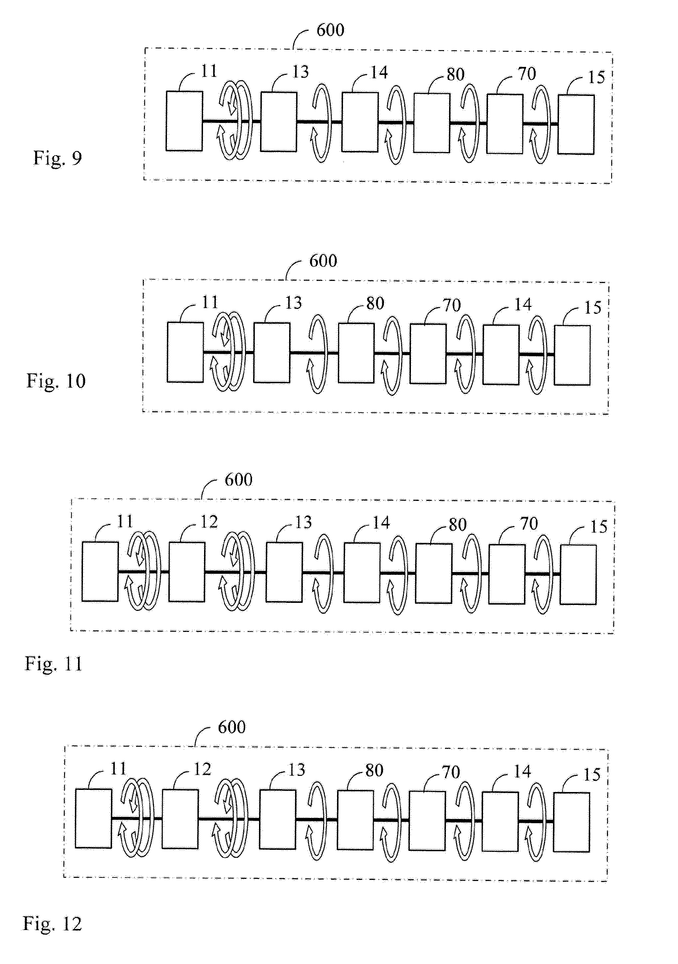

The main transmission structure and operation features of the bidirectional input unidirectional output transmission device (13) are as followings:
- the first rotating direction and the second rotating direction are opposite rotating directions;
- when driving the input end in the first rotating direction, the output end can be driven through the first transmission wheel system for performing output in the first rotating direction;
- when driving the input end in the second rotating direction, the output end can be driven through the second transmission wheel system for performing output in the first rotating direction;
- a unidirectional transmission device is installed between the first transmission wheel system and the second transmission wheel system, when the first transmission wheel system is driven to input in the first rotating direction and output in the first rotating direction, interfere with the second transmission wheel system can be prevented;
- a unidirectional transmission device is installed between the second transmission wheel system and the first transmission wheel system, when the second transmission wheel system is driven to input in the second rotating direction and output in the first rotating direction, interfere with the first transmission wheel system can be prevented;
- the output end of the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- engaging or releasing operational clutch device (70): constituted by a mechanism driven by torque or centrifugal force or manual force or pneumatic force or hydraulic force or electromagnetic force for performing engaging or releasing; The engaging or releasing operational clutch device (70) might consist of a torque activated clutch such as the one which is disclosed in Figures 9 and 10 of EP2410195, the arrangement of which is imported herein by reference.
- loading wheel set (15): driven by the output end of the engaging or releasing operational clutch device (70) for driving the vehicle combined with the loading wheel set (15).

According to the bidirectional input unidirectional output driven vehicle having clutch device at load end, when the manual input device (11) is driven by human's feet to perform driving in the first driving rotating direction or in the second driving rotating direction of different rotating direction, the rotational kinetic energy outputted from the output end of the manual input device (11) can be transferred through the additionally-installed front transmission device (12) to the input end of the bidirectional input unidirectional output transmission device (13), so the output end of the bidirectional input unidirectional output transmission device (13) is enabled to output rotational kinetic energy in the constant rotating direction for being transferred to the engaging or releasing operational clutch device (70), and the output end of the engaging or releasing operational clutch device (70) is served to drive the loading wheel set (15) thereby driving the vehicle combined with the loading wheel set (15);

FIG 2 is a block schematic view of a driving device illustrating a front transmission device (12) being additionally installed between the manual input device (11) and the bidirectional input unidirectional output transmission device (13) shown in FIG 1;

As shown in FIG 2, which is a structural view showing the bidirectional input unidirectional output driven vehicle having clutch device at load end, besides components of a treadle-drive vehicle and a machine body (600), mainly consists of:
- manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- the kinetic energy of the first driving rotating direction and the inputted kinetic energy of the second driving rotating direction are from human's feet for driving the input end of the manual input device (11);
- the first driving rotating direction is opposite to the second driving rotating direction;
- front transmission device (12): the front transmission device (12) is constituted by one or more than one of the following transmission devices, including various gear-type, belt-type or friction-type rotational transmission structures having fixed or variable speed ratios;

The front transmission device (12) is driven by the manual input device (11), and the outputted rotational kinetic energy is served to drive the bidirectional input unidirectional output transmission device (13);
- bidirectional input unidirectional output transmission device (13): the bidirectional input unidirectional output transmission device (13) is driven by the kinetic energy in various rotating directions from the front transmission device (12) so as to output the kinetic energy in a constant rotating direction, and an engaging or releasing operational clutch device (70) is installed between the output end of the bidirectional input unidirectional output transmission device (13) and the input end of the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;

Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;

The main transmission structure and operation features of the bidirectional input unidirectional output transmission device (13) are as followings:
- the first rotating direction and the second rotating direction are opposite rotating directions;
- when driving the input end in the first rotating direction, the output end can be driven through the first transmission wheel system for performing output in the first rotating direction;
- when driving the input end in the second rotating direction, the output end can be driven through the second transmission wheel system for performing output in the first rotating direction;
- a unidirectional transmission device is installed between the first transmission wheel system and the second transmission wheel system, when the first transmission wheel system is driven to input in the first rotating direction and output in the first rotating direction, interfere with the second transmission wheel system can be prevented;
- a unidirectional transmission device is installed between the second transmission wheel system and the first transmission wheel system, when the second transmission wheel system is driven to input in the second rotating direction and output in the first rotating direction, interfere with the first transmission wheel system can be prevented;
- the output end of the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- engaging or releasing operational clutch device (70): constituted by a mechanism driven by torque or centrifugal force or manual force or pneumatic force or hydraulic force or electromagnetic force for performing engaging or releasing;
- loading wheel set (15): driven by the output end of the engaging or releasing operational clutch device (70) for driving the vehicle combined with the loading wheel set (15).

According to the bidirectional input unidirectional output driven vehicle having clutch device at load end, the rotational kinetic energy outputted from the output end through the manual input device (11) being driven by the human's feet in the normal or reverse direction is inputted to the bidirectional input unidirectional output transmission device (13), and the output end of the bidirectional input unidirectional output transmission device (13) performs output in constant rotating direction, the outputted rotational kinetic energy in constant rotating direction can be transferred through the additionally-installed rear transmission device (14) for driving the engaging or releasing operational clutch device (70), and the output end of the engaging or releasing operational clutch device (70) is served to drive the loading wheel set (15) thereby driving the vehicle combined with the loading wheel set (15);

FIG 3 is a block schematic view of a driving device illustrating the output end of the bidirectional input unidirectional output transmission device (13) shown in FIG 1 being additionally installed with a rear transmission device (14) and subsequently installed with an engaging or releasing operational clutch device (70) so as to drive the loading wheel set (15);

As shown in FIG 3, which is a structural view showing the bidirectional input unidirectional output driven vehicle having clutch device at load end, besides components of a treadle-drive vehicle and a machine body (600), mainly consists of:
- manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- the kinetic energy of the first driving rotating direction and the inputted kinetic energy of the second driving rotating direction are from human's feet for driving the input end of the manual input device (11);
- the first driving rotating direction is opposite to the second driving rotating direction;
- bidirectional input unidirectional output transmission device (13): the bidirectional input unidirectional output transmission device (13) is driven by the kinetic energy in various rotating directions from the manual input device (11) through the front transmission device (12) so as to output the kinetic energy in a constant rotating direction, and the output end of the bidirectional input unidirectional output transmission device (13) drives the rear transmission device (14), the output end of the rear transmission device (14) drives the engaging or releasing operational clutch device (70), and then through the output end of the engaging or releasing operational clutch device (70) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;

Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the rear transmission device (14), then the output end of the rear transmission device (14) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;

The main transmission structure and operation features of the bidirectional input unidirectional output transmission device (13) are as followings:
- the first rotating direction and the second rotating direction are opposite rotating directions;
- when driving the input end in the first rotating direction, the output end can be driven through the first transmission wheel system for performing output in the first rotating direction;

- when driving the input end in the second rotating direction, the output end can be driven through the second transmission wheel system for performing output in the first rotating direction;
- a unidirectional transmission device is installed between the first transmission wheel system and the second transmission wheel system, when the first transmission wheel system is driven to input in the first rotating direction and output in the first rotating direction, interfere with the second transmission wheel system can be prevented;
- a unidirectional transmission device is installed between the second transmission wheel system and the first transmission wheel system, when the second transmission wheel system is driven to input in the second rotating direction and output in the first rotating direction, interfere with the first transmission wheel system can be prevented;
- the output end of the rear transmission device (14) driven by the output end of the bidirectional input unidirectional output transmission device (13) is served to drive the engaging or releasing operational clutch device (70) formed in the radial or axial direction, so when the output end thereof performs the reverse driving in opposite rotating direction for the purpose of reverse linking, the engaging or releasing operational clutch device (70) is released, thereby preventing the wheel system with bidirectional input and constant directional output from being in a rigid locking state;
- engaging or releasing operational clutch device (70): constituted by a mechanism driven by torque or centrifugal force or manual force or pneumatic force or hydraulic force or electromagnetic force for performing engaging or releasing;
- the rear transmission device (14) is constituted by one or more than one of the following transmission devices, including various gear-type, belt-type or friction-type rotational transmission structures having fixed or variable speed ratios, driven by the bidirectional input unidirectional output transmission device (13), and the output end thereof is served to drive the engaging or releasing operational clutch device (70);
- loading wheel set (15): driven by the output end of the engaging or releasing operational clutch device (70) for driving the vehicle combined with the loading wheel set (15).

According to the bidirectional input unidirectional output driven vehicle having clutch device at load end, the manual input device (11) is driven by human's feet in the normal or reverse direction, the rotational kinetic energy outputted from the output end is transferred to the input end of the bidirectional input unidirectional output transmission device (13), the output end of the bidirectional input unidirectional output transmission device (13) performs output in the constant rotating direction for driving the input end of the engaging or releasing operational clutch device (70), and the output end of the engaging or releasing operational clutch device (70) further drives the loading wheel set (15) through the additionally-installed rear transmission device (14) thereby driving the vehicle combined with the loading wheel set (15);

FIG 4 is a block schematic view of a driving device illustrating the output end of the bidirectional input unidirectional output transmission device (13) shown in FIG 1 being additionally installed with the engaging or releasing operational clutch device (70) then subsequently installed with the rear transmission device (14) so as to drive the loading wheel set (15);

As shown in FIG 4, which is a structural view showing the bidirectional input unidirectional output driven vehicle having clutch device at load end, besides components of a treadle-drive vehicle and a machine body (600), mainly consists of:
- manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- the kinetic energy of the first driving rotating direction and the inputted kinetic energy of the second driving rotating direction are from human's feet for driving the input end of the manual input device (11);
- the first driving rotating direction is opposite to the second driving rotating direction;
- bidirectional input unidirectional output transmission device (13): the bidirectional input unidirectional output transmission device (13) is driven by the kinetic energy in various rotating directions from the manual input device (11) so as to output the kinetic energy in a constant rotating direction for driving the input end of the engaging or releasing operational clutch device (70), the output end of the engaging or releasing operational clutch device (70) drives the rear transmission device (14), then the output end of the rear transmission device (14) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;

Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;

The main transmission structure and operation features of the bidirectional input unidirectional output transmission device (13) are as followings:
- the first rotating direction and the second rotating direction are opposite rotating directions;
- when driving the input end in the first rotating direction, the output end can be driven through the first transmission wheel system for performing output in the first rotating direction;
- when driving the input end in the second rotating direction, the output end can be driven through the second transmission wheel system for performing output in the first rotating direction;
- a unidirectional transmission device is installed between the first transmission wheel system and the second transmission wheel system, when the first transmission wheel system is driven to input in the first rotating direction and output in the first rotating direction, interfere with the second transmission wheel system can be prevented;
- a unidirectional transmission device is installed between the second transmission wheel system and the first transmission wheel system, when the second transmission wheel system is driven to input in the second rotating direction and output in the first rotating direction, interfere with the first transmission wheel system can be prevented;
- the output end of the bidirectional input unidirectional output transmission device (13) is served to drive the engaging or releasing operational clutch device (70) formed in the radial or axial direction, the output end of the engaging or releasing operational clutch device (70) drives the rear transmission device (14), then the output end of the rear transmission device (14) drives the loading wheel set (15), when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- engaging or releasing operational clutch device (70): constituted by a mechanism driven by torque or centrifugal force or manual force or pneumatic force or hydraulic force or electromagnetic force for performing engaging or releasing;
- the rear transmission device (14) is constituted by one or more than one of the following transmission devices, including various gear-type, belt-type or friction-type rotational transmission structures having fixed or variable speed ratios, driven by the output end of the engaging or releasing operational clutch device (70), and the output end thereof is served to drive the loading wheel set (15);
- loading wheel set (15): driven by the output end of the rear transmission device (14) for driving the vehicle combined with the loading wheel set (15).

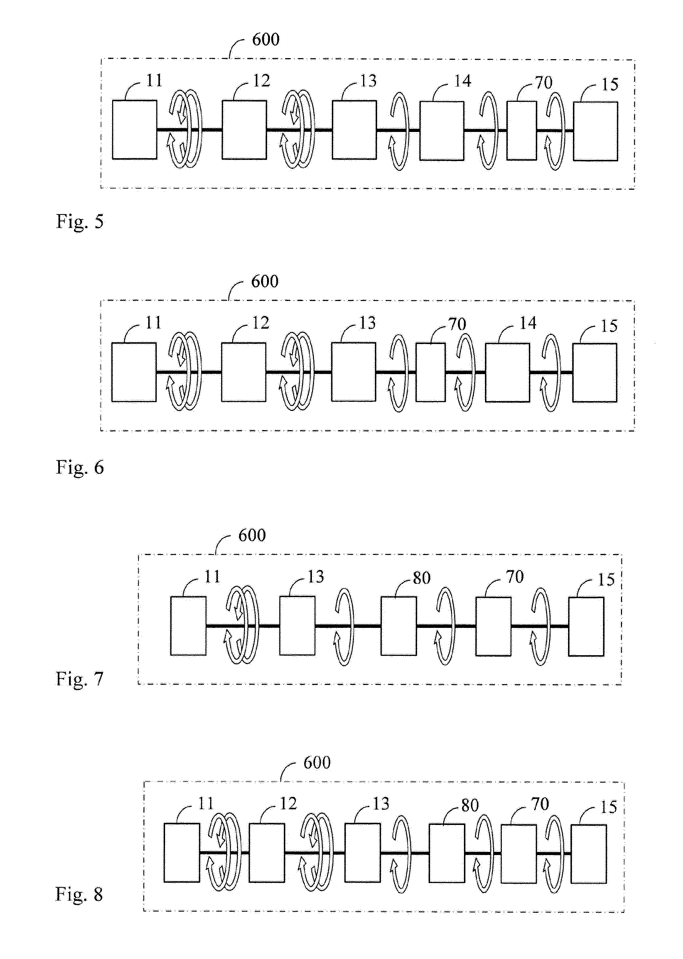

FIG 5 is a block schematic view of a driving device illustrating the front transmission device (12) being additionally installed between the manual input device (11) and the bidirectional input unidirectional output transmission device (13) shown in FIG 3;

As shown in FIG 5, which is a structural view showing the bidirectional input unidirectional output driven vehicle having clutch device at load end, besides components of a treadle-drive vehicle and a machine body (600), mainly consists of:
- manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- the kinetic energy of the first driving rotating direction and the inputted kinetic energy of the second driving rotating direction are from human's feet for driving the input end of the manual input device (11);
- the first driving rotating direction is opposite to the second driving rotating direction;
- front transmission device (12): the front transmission device (12) is constituted by one or more than one of the following transmission devices, including various gear-type, belt-type or friction-type rotational transmission structures having fixed or variable speed ratios;
   The front transmission device (12) is driven by the manual input device (11), and the outputted rotational kinetic energy is served to drive the bidirectional input unidirectional output transmission device (13);
- bidirectional input unidirectional output transmission device (13): the bidirectional input unidirectional output transmission device (13) is driven by the kinetic energy in various rotating directions from the front transmission device (12) so as to output the kinetic energy in a constant rotating direction, and the output end of the bidirectional input unidirectional output transmission device (13) drives the rear transmission device (14), the output end of the rear transmission device (14) drives the engaging or releasing operational clutch device (70), and then the output end of the engaging or releasing operational clutch device (70) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;

Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the rear transmission device (14), then the output end of the rear transmission device (14) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;

The main transmission structure and operation features of the bidirectional input unidirectional output transmission device (13) are as followings:
- the first rotating direction and the second rotating direction are opposite rotating directions;
- when driving the input end in the first rotating direction, the output end can be driven through the first transmission wheel system for performing output in the first rotating direction;
- when driving the input end in the second rotating direction, the output end can be driven through the second transmission wheel system for performing output in the first rotating direction;
- a unidirectional transmission device is installed between the first transmission wheel system and the second transmission wheel system, when the first transmission wheel system is driven to input in the first rotating direction and output in the first rotating direction, interfere with the second transmission wheel system can be prevented;
- a unidirectional transmission device is installed between the second transmission wheel system and the first transmission wheel system, when the second transmission wheel system is driven to input in the second rotating direction and output in the first rotating direction, interfere with the first transmission wheel system can be prevented;
- the output end of the rear transmission device (14) driven by the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- engaging or releasing operational clutch device (70): constituted by a mechanism driven by torque or centrifugal force or manual force or pneumatic force or hydraulic force or electromagnetic force for performing engaging or releasing;
- the rear transmission device (14) is constituted by one or more than one of the following transmission devices, including various gear-type, belt-type or friction-type rotational transmission structures having fixed or variable speed ratios, driven by the output end of the bidirectional input unidirectional output transmission device (13), and the output end thereof is served to drive the engaging or releasing operational clutch device (70);
- loading wheel set (15): driven by the output end of the engaging or releasing operational clutch device (70) for driving the vehicle combined with the loading wheel set (15).

FIG 6 is a block schematic view of a driving device illustrating the front transmission device (12) being additionally installed between the manual input device (11) and the bidirectional input unidirectional output transmission device (13) shown in FIG 4;

As shown in FIG 6, which is a structural view showing the bidirectional input unidirectional output driven vehicle having clutch device at load end, besides components of a treadle-drive vehicle and a machine body (600), mainly consists of:
- manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- the kinetic energy of the first driving rotating direction and the inputted kinetic energy of the second driving rotating direction are from human's feet for driving the input end of the manual input device (11);
- the first driving rotating direction is opposite to the second driving rotating direction;
- front transmission device (12): the front transmission device (12) is constituted by one or more than one of the following transmission devices, including various gear-type, belt-type or friction-type rotational transmission structures having fixed or variable speed ratios;

The front transmission device (12) is driven by the manual input device (11), and the outputted rotational kinetic energy is served to drive the bidirectional input unidirectional output transmission device (13);
- bidirectional input unidirectional output transmission device (13): the bidirectional input unidirectional output transmission device (13) is driven by the kinetic energy in various rotating directions from the front transmission device (12) so as to output the kinetic energy in a constant rotating direction for driving the input end of the engaging or releasing operational clutch device (70), and the output end of the engaging or releasing operational clutch device (70) drives the rear transmission device (14), and the output end of the rear transmission device (14) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;

Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;

The main transmission structure and operation features of the bidirectional input unidirectional output transmission device (13) are as followings:
- the first rotating direction and the second rotating direction are opposite rotating directions;
- when driving the input end in the first rotating direction, the output end can be driven through the first transmission wheel system for performing output in the first rotating direction;
- when driving the input end in the second rotating direction, the output end can be driven through the second transmission wheel system for performing output in the first rotating direction;
- a unidirectional transmission device is installed between the first transmission wheel system and the second transmission wheel system, when the first transmission wheel system is driven to input in the first rotating direction and output in the first rotating direction, interfere with the second transmission wheel system can be prevented;
- a unidirectional transmission device is installed between the second transmission wheel system and the first transmission wheel system, when the second transmission wheel system is driven to input in the second rotating direction and output in the first rotating direction, interfere with the first transmission wheel system can be prevented;
- the output end of the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- engaging or releasing operational clutch device (70): constituted by a mechanism driven by torque or centrifugal force or manual force or pneumatic force or hydraulic force or electromagnetic force for performing engaging or releasing;
- the rear transmission device (14) is constituted by one or more than one of the following transmission devices, including various gear-type, belt-type or friction-type rotational transmission structures having fixed or variable speed ratios, driven by the output end of the engaging or releasing operational clutch device (70), and the output end thereof is served to drive the loading wheel set (15);
- loading wheel set (15): driven by the output end of the rear transmission device (14) for driving the vehicle combined with the loading wheel set (15).

According to the embodiments disclosed from FIG 1 to FIG 6, a unidirectional transmission device (80) can be further installed in front of the input end of the engaging or releasing operational clutch device (70) of the transmission system for transferring the rotational kinetic energy to the input end of the engaging or releasing operational clutch device (70).

It is described as follows:
FIG 7 is a block schematic view of a driving device illustrating a unidirectional transmission device (80) being additionally installed between the output end of the bidirectional input unidirectional output transmission device (13) and the input end of the engaging or releasing operational clutch device (70) shown in FIG. 1;

As shown in FIG 7, it is constituted by additionally installing a unidirectional transmission device (80) between the output end of the bidirectional input unidirectional output transmission device (13) and the input end of the engaging or releasing operational clutch device (70).

FIG 8 is a block schematic view of a driving device illustrating a unidirectional transmission device (80) being additionally installed between the output end of the bidirectional input unidirectional output transmission device (13) and the input end of the engaging or releasing operational clutch device (70) shown in FIG 2;

As shown in FIG 8, it is constituted by additionally installing a unidirectional transmission device (80) between the output end of the bidirectional input unidirectional output transmission device (13) and the input end of the engaging or releasing operational clutch device (70).

FIG 9 is a block schematic view of a driving device illustrating a unidirectional transmission device (80) being additionally installed between the output end of the rear transmission device (14) and the input end of the engaging or releasing operational clutch device (70) shown in FIG 3;

As shown in FIG 9, it is constituted by additionally installing a unidirectional transmission device (80) between the output end of the rear transmission device (14) and the input end of the engaging or releasing operational clutch device (70).

FIG 10 is a block schematic view of a driving device illustrating a unidirectional transmission device (80) being additionally installed between the output end of the bidirectional input unidirectional output transmission device (13) and the input end of the engaging or releasing operational clutch device (70) shown in FIG 4;

As shown in FIG 10, it is constituted by additionally installing a unidirectional transmission device (80) between the output end of the bidirectional input unidirectional output transmission device (13) and the input end of the engaging or releasing operational clutch device (70).

FIG. 11 is a block schematic view of a driving device illustrating a unidirectional transmission device (80) being additionally installed between the output end of the rear transmission device (14) and the input end of the engaging or releasing operational clutch device (70) shown in FIG 5;

As shown in FIG 11, it is constituted by additionally installing a unidirectional transmission device (80) between the rear transmission device (14) and the input end of the engaging or releasing operational clutch device (70).

FIG 12 is a block schematic view of a driving device illustrating a unidirectional transmission device (80) being additionally installed between the output end of the bidirectional input unidirectional output transmission device (13) and the input end of the engaging or releasing operational clutch device (70) shown in FIG 6;

As shown in FIG 12, it is constituted by additionally installing a unidirectional transmission device (80) between the output end of the bidirectional input unidirectional output transmission device (13) and the input end of the engaging or releasing operational clutch device (70).

According to the embodiments disclosed from FIG 1 to FIG 6, a unidirectional transmission device (80) can be further installed in front of the input end of the loading wheel set (15) of the transmission system for transferring the rotational kinetic energy to the input end of the loading wheel set (15).

It is described as follows:

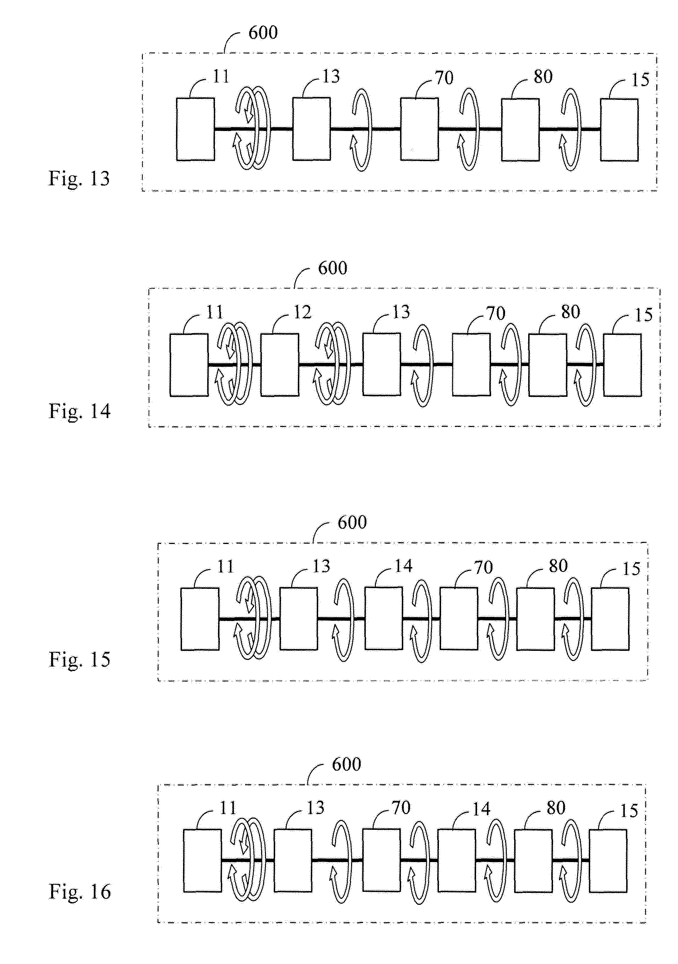

FIG 13 is a block schematic view of a driving device illustrating a unidirectional transmission device (80) being additionally installed between the output end of the engaging or releasing operational clutch device (70) and the input end of the loading wheel set (15) shown in FIG. 1.

As shown in FIG 13, it is constituted by additionally installing a unidirectional transmission device (80) between the output end of the engaging or releasing operational clutch device (70) and the input end of the loading wheel set (15).

FIG 14 is a block schematic view of a driving device illustrating a unidirectional transmission device (80) being additionally installed between the output end of the engaging or releasing operational clutch device (70) and the input end of the loading wheel set (15) shown in FIG 2.

As shown in FIG 14, it is constituted by additionally installing a unidirectional transmission device (80) between the output end of the engaging or releasing operational clutch device (70) and the input end of the loading wheel set (15).

FIG 15 is a block schematic view of a driving device illustrating a unidirectional transmission device (80) being additionally installed between the output end of the engaging or releasing operational clutch device (70) and the input end of the loading wheel set (15) shown in FIG 3.

As shown in FIG 15, it is constituted by additionally installing a unidirectional transmission device (80) between the output end of the engaging or releasing operational clutch device (70) and the input end of the loading wheel set (15).

FIG 16 is a block schematic view of a driving device illustrating a unidirectional transmission device (80) being additionally installed between the output end of the rear transmission device (14) and the input end of the loading wheel set (15) shown in FIG 4.

As shown in FIG 16, it is constituted by additionally installing a unidirectional transmission device (80) between the output end of the rear transmission device (14) and the input end of the loading wheel set (15).

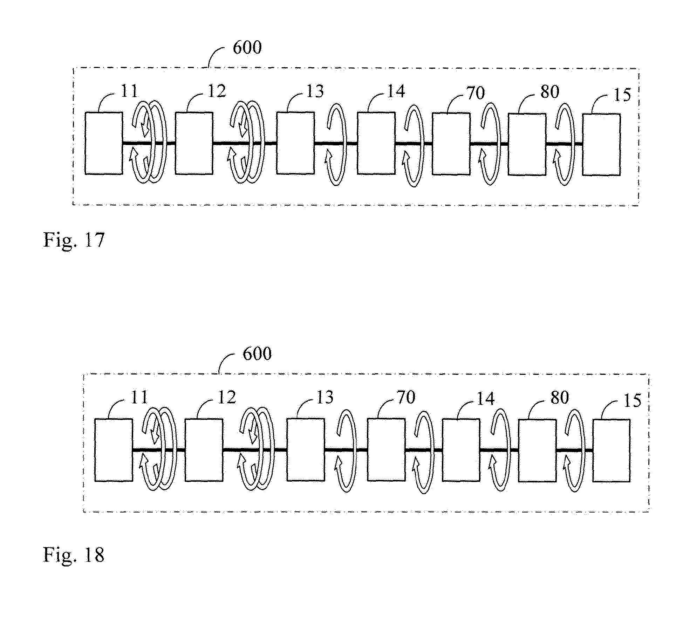

FIG 17 is a block schematic view of a driving device illustrating a unidirectional transmission device (80) being additionally installed between the output end of the engaging or releasing operational clutch device (70) and the input end of the loading wheel set (15) shown in FIG 5.

As shown in FIG 17, it is constituted by additionally installing a unidirectional transmission device (80) between the output end of the engaging or releasing operational clutch device (70) and the input end of the loading wheel set (15).

FIG 18 is a block schematic view of a driving device illustrating a unidirectional transmission device (80) being additionally installed between the output end of the rear transmission device (14) and the input end of the loading wheel set (15) shown in FIG 6.

As shown in FIG 18, it is constituted by additionally installing a unidirectional transmission device (80) between the output end of the rear transmission device (14) and the input end of the loading wheel set (15).

According to the embodiments disclosed from FIG 1 to FIG 8, the manual input device (11), the front transmission device (12), the bidirectional input unidirectional output transmission device (13), the rear transmission device (14), the engaging or releasing operational clutch device (70) and the loading wheel set (15) of which the bidirectional input unidirectional output driven vehicle having clutch device at load end is composed are formed as an integral structural body, or a part thereof is formed as an integral structural body and other part thereof is individually formed, or each component is individually formed.

## Claims

1. A bidirectional input unidirectional output driven vehicle having clutch device at load end, in which a manual input device capable of bidirectional inputting is installed, the output end thereof is served to output to the input end of a bidirectional input unidirectional output transmission device, the output end of the bidirectional input unidirectional output transmission device performs output in a constant rotating direction, so a loading wheel set can be driven through an engaging or releasing operational clutch device (70), the rider is allowed to select the input direction of driving, so in the different driving input direction, the output in a constant rotating direction with the same or different speed ratios can be served to drive the loading wheel set, and when the loading wheel set performs reverse driving in the opposite rotating direction for the purpose of reverse linking, the load is released by the engaging or releasing operational clutch device (70), thereby preventing the transmission wheel system of the bidirectional input unidirectional output driven vehicle having clutch device at load end from being locked, besides components of a treadle-drive vehicle and a machine body (600), mainly consists of:
- - manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- - the kinetic energy of the first driving rotating direction and the inputted kinetic energy of the second driving rotating direction are from human's feet for driving the input end of the manual input device (11);
- - the first driving rotating direction is opposite to the second driving rotating direction;
- - bidirectional input unidirectional output transmission device (13): the bidirectional input unidirectional output transmission device (13) is driven by the kinetic energy in various rotating directions from the manual input device (11) so as to output the kinetic energy in a constant rotating direction, and an engaging or releasing operational clutch device (70) is installed between the output end of the bidirectional input unidirectional output transmission device (13) and the input end of the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;
Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;
The main transmission structure and operation features of the bidirectional input unidirectional output transmission device (13) are as followings:
- - the first rotating direction and the second rotating direction are opposite rotating directions;
- - when driving the input end in the first rotating direction, the output end can be driven through the first transmission wheel system for performing output in the first rotating direction;
- - when driving the input end in the second rotating direction, the output end can be driven through the second transmission wheel system for performing output in the first rotating direction;
- - a unidirectional transmission device is installed between the first transmission wheel system and the second transmission wheel system, when the first transmission wheel system is driven to input in the first rotating direction and output in the first rotating direction, interfere with the second transmission wheel system can be prevented;
- - a unidirectional transmission device is installed between the second transmission wheel system and the first transmission wheel system, when the second transmission wheel system is driven to input in the second rotating direction and output in the first rotating direction, interfere with the first transmission wheel system can be prevented;
- - the output end of the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- - engaging or releasing operational clutch device (70): constituted by a mechanism driven by torque or centrifugal force or manual force or pneumatic force or hydraulic force or electromagnetic force for performing engaging or releasing;
- - loading wheel set (15): driven by the output end of the engaging or releasing operational clutch device (70) for driving the vehicle combined with the loading wheel set (15).

2. A bidirectional input unidirectional output driven vehicle having clutch device at load end as claimed in claim 1, wherein the driving device is additionally installed with a front transmission device (12) between the manual input device (11) and the bidirectional input unidirectional output transmission device (13), and besides components of a treadle-drive vehicle and a machine body (600), mainly consists of:
- - manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- - the kinetic energy of the first driving rotating direction and the inputted kinetic energy of the second driving rotating direction are from human's feet for driving the input end of the manual input device (11);
- - the first driving rotating direction is opposite to the second driving rotating direction;
- - front transmission device (12): the front transmission device (12) is constituted by one or more than one of the following transmission devices, including various gear-type, belt-type or friction-type rotational transmission structures having fixed or variable speed ratios;
The front transmission device (12) is driven by the manual input device (11), and the outputted rotational kinetic energy is served to drive the bidirectional input unidirectional output transmission device (13);
- - bidirectional input unidirectional output transmission device (13): the bidirectional input unidirectional output transmission device (13) is driven by the kinetic energy in various rotating directions from the front transmission device (12) so as to output the kinetic energy in a constant rotating direction, and an engaging or releasing operational clutch device (70) is installed between the output end of the bidirectional input unidirectional output transmission device (13) and the input end of the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;
Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;
The main transmission structure and operation features of the bidirectional input unidirectional output transmission device (13) are as followings:
- - the first rotating direction and the second rotating direction are opposite rotating directions;
- - when driving the input end in the first rotating direction, the output end can be driven through the first transmission wheel system for performing output in the first rotating direction;
- - when driving the input end in the second rotating direction, the output end can be driven through the second transmission wheel system for performing output in the first rotating direction;
- - a unidirectional transmission device is installed between the first transmission wheel system and the second transmission wheel system, when the first transmission wheel system is driven to input in the first rotating direction and output in the first rotating direction, interfere with the second transmission wheel system can be prevented;
- - a unidirectional transmission device is installed between the second transmission wheel system and the first transmission wheel system, when the second transmission wheel system is driven to input in the second rotating direction and output in the first rotating direction, interfere with the first transmission wheel system can be prevented;
- - the output end of the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- - engaging or releasing operational clutch device (70): constituted by a mechanism driven by torque or centrifugal force or manual force or pneumatic force or hydraulic force or electromagnetic force for performing engaging or releasing;
- - loading wheel set (15): driven by the output end of the engaging or releasing operational clutch device (70) for driving the vehicle combined with the loading wheel set (15).

3. A bidirectional input unidirectional output driven vehicle having clutch device at load end as claimed in claim 1, wherein the driving device is additionally installed with a rear transmission device (14) and subsequently installed with an engaging or releasing operational clutch device (70) at the output end of the bidirectional input unidirectional output transmission device (13), so as to drive the loading wheel set (15), and besides components of a treadle-drive vehicle and a machine body (600), mainly consists of:
- - manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- - the kinetic energy of the first driving rotating direction and the inputted kinetic energy of the second driving rotating direction are from human's feet for driving the input end of the manual input device (11);
- - the first driving rotating direction is opposite to the second driving rotating direction;
- - bidirectional input unidirectional output transmission device (13): the bidirectional input unidirectional output transmission device (13) is driven by the kinetic energy in various rotating directions from the manual input device (11) through the front transmission device (12) so as to output the kinetic energy in a constant rotating direction, and the output end of the bidirectional input unidirectional output transmission device (13) drives the rear transmission device (14), the output end of the rear transmission device (14) drives the engaging or releasing operational clutch device (70), and then through the output end of the engaging or releasing operational clutch device (70) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;
Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the rear transmission device (14), then the output end of the rear transmission device (14) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;
The main transmission structure and operation features of the bidirectional input unidirectional output transmission device (13) are as followings:
- - the first rotating direction and the second rotating direction are opposite rotating directions;
- - when driving the input end in the first rotating direction, the output end can be driven through the first transmission wheel system for performing output in the first rotating direction;
- - when driving the input end in the second rotating direction, the output end can be driven through the second transmission wheel system for performing output in the first rotating direction;
- - a unidirectional transmission device is installed between the first transmission wheel system and the second transmission wheel system, when the first transmission wheel system is driven to input in the first rotating direction and output in the first rotating direction, interfere with the second transmission wheel system can be prevented;
- - a unidirectional transmission device is installed between the second transmission wheel system and the first transmission wheel system, when the second transmission wheel system is driven to input in the second rotating direction and output in the first rotating direction, interfere with the first transmission wheel system can be prevented;
- - the output end of the rear transmission device (14) driven by the output end of the bidirectional input unidirectional output transmission device (13) is served to drive the engaging or releasing operational clutch device (70) formed in the radial or axial direction, so when the output end thereof performs the reverse driving in opposite rotating direction for the purpose of reverse linking, the engaging or releasing operational clutch device (70) is released, thereby preventing the wheel system with bidirectional input and constant directional output from being in a rigid locking state;
- - engaging or releasing operational clutch device (70): constituted by a mechanism driven by torque or centrifugal force or manual force or pneumatic force or hydraulic force or electromagnetic force for performing engaging or releasing;
- - the rear transmission device (14) is constituted by one or more than one of the following transmission devices, including various gear-type, belt-type or friction-type rotational transmission structures having fixed or variable speed ratios, driven by the bidirectional input unidirectional output transmission device (13), and the output end thereof is served to drive the engaging or releasing operational clutch device (70);
- - loading wheel set (15): driven by the output end of the engaging or releasing operational clutch device (70) for driving the vehicle combined with the loading wheel set (15).

4. A bidirectional input unidirectional output driven vehicle having clutch device at load end as claimed in claim 1, wherein the driving device is additionally installed with the engaging or releasing operational clutch device (70) then subsequently installed with the rear transmission device (14) at the output end of the bidirectional input unidirectional output transmission device (13), so as to drive the loading wheel set (15), and besides components of a treadle-drive vehicle and a machine body (600), mainly consists of:
- - manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- - the kinetic energy of the first driving rotating direction and the inputted kinetic energy of the second driving rotating direction are from human's feet for driving the input end of the manual input device (11);
- - the first driving rotating direction is opposite to the second driving rotating direction;
- - bidirectional input unidirectional output transmission device (13): the bidirectional input unidirectional output transmission device (13) is driven by the kinetic energy in various rotating directions from the manual input device (11) so as to output the kinetic energy in a constant rotating direction for driving the input end of the engaging or releasing operational clutch device (70), the output end of the engaging or releasing operational clutch device (70) drives the rear transmission device (14), then the output end of the rear transmission device (14) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;
Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;
The main transmission structure and operation features of the bidirectional input unidirectional output transmission device (13) are as followings:
- - the first rotating direction and the second rotating direction are opposite rotating directions;
- - when driving the input end in the first rotating direction, the output end can be driven through the first transmission wheel system for performing output in the first rotating direction;
- - when driving the input end in the second rotating direction, the output end can be driven through the second transmission wheel system for performing output in the first rotating direction;
- - a unidirectional transmission device is installed between the first transmission wheel system and the second transmission wheel system, when the first transmission wheel system is driven to input in the first rotating direction and output in the first rotating direction, interfere with the second transmission wheel system can be prevented;
- - a unidirectional transmission device is installed between the second transmission wheel system and the first transmission wheel system, when the second transmission wheel system is driven to input in the second rotating direction and output in the first rotating direction, interfere with the first transmission wheel system can be prevented;
- - the output end of the bidirectional input unidirectional output transmission device (13) is served to drive the engaging or releasing operational clutch device (70) formed in the radial or axial direction, the output end of the engaging or releasing operational clutch device (70) drives the rear transmission device (14), then the output end of the rear transmission device (14) drives the loading wheel set (15), when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- - engaging or releasing operational clutch device (70): constituted by a mechanism driven by torque or centrifugal force or manual force or pneumatic force or hydraulic force or electromagnetic force for performing engaging or releasing;
- - the rear transmission device (14) is constituted by one or more than one of the following transmission devices, including various gear-type, belt-type or friction-type rotational transmission structures having fixed or variable speed ratios, driven by the output end of the engaging or releasing operational clutch device (70), and the output end thereof is served to drive the loading wheel set (15);
- - loading wheel set (15): driven by the output end of the rear transmission device (14) for driving the vehicle combined with the loading wheel set (15).

5. A bidirectional input unidirectional output driven vehicle having clutch device at load end as claimed in claim 3, wherein the driving device is additionally installed with the front transmission device (12) between the manual input device (11) and the bidirectional input unidirectional output transmission device (13), and besides components of a treadle-drive vehicle and a machine body (600), mainly consists of:
- - manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- - the kinetic energy of the first driving rotating direction and the inputted kinetic energy of the second driving rotating direction are from human's feet for driving the input end of the manual input device (11);
- - the first driving rotating direction is opposite to the second driving rotating direction;
- - front transmission device (12): the front transmission device (12) is constituted by one or more than one of the following transmission devices, including various gear-type, belt-type or friction-type rotational transmission structures having fixed or variable speed ratios;
The front transmission device (12) is driven by the manual input device (11), and the outputted rotational kinetic energy is served to drive the bidirectional input unidirectional output transmission device (13);
- - bidirectional input unidirectional output transmission device (13): the bidirectional input unidirectional output transmission device (13) is driven by the kinetic energy in various rotating directions from the front transmission device (12) so as to output the kinetic energy in a constant rotating direction, and the output end of the bidirectional input unidirectional output transmission device (13) drives the rear transmission device (14), the output end of the rear transmission device (14) drives the engaging or releasing operational clutch device (70), and then the output end of the engaging or releasing operational clutch device (70) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;
Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the rear transmission device (14), then the output end of the rear transmission device (14) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;
The main transmission structure and operation features of the bidirectional input unidirectional output transmission device (13) are as followings:
- - the first rotating direction and the second rotating direction are opposite rotating directions;
- - when driving the input end in the first rotating direction, the output end can be driven through the first transmission wheel system for performing output in the first rotating direction;
- - when driving the input end in the second rotating direction, the output end can be driven through the second transmission wheel system for performing output in the first rotating direction;
- - a unidirectional transmission device is installed between the first transmission wheel system and the second transmission wheel system, when the first transmission wheel system is driven to input in the first rotating direction and output in the first rotating direction, interfere with the second transmission wheel system can be prevented;
- - a unidirectional transmission device is installed between the second transmission wheel system and the first transmission wheel system, when the second transmission wheel system is driven to input in the second rotating direction and output in the first rotating direction, interfere with the first transmission wheel system can be prevented;
- - the output end of the rear transmission device (14) driven by the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- - engaging or releasing operational clutch device (70): constituted by a mechanism driven by torque or centrifugal force or manual force or pneumatic force or hydraulic force or electromagnetic force for performing engaging or releasing;
- - the rear transmission device (14) is constituted by one or more than one of the following transmission devices, including various gear-type, belt-type or friction-type rotational transmission structures having fixed or variable speed ratios, driven by the output end of the bidirectional input unidirectional output transmission device (13), and the output end thereof is served to drive the engaging or releasing operational clutch device (70);
- - loading wheel set (15): driven by the output end of the engaging or releasing operational clutch device (70) for driving the vehicle combined with the loading wheel set (15).

6. A bidirectional input unidirectional output driven vehicle having clutch device at load end as claimed in claim 4, wherein the driving device is additionally installed with the front transmission device (12) between the manual input device (11) and the bidirectional input unidirectional output transmission device (13), and besides components of a treadle-drive vehicle and a machine body (600), mainly consists of:
- - manual input device (11): constituted by a bidirectional rotating output mechanism capable of receiving input of normal or reverse rotating driving or input of reciprocal driving performed by human's feet, including being composed of a treadle, a crank, and a bidirectional rotating transmission wheel set, or composed of a handle, a handgrip and a bidirectional rotating transmission wheel set, and including being composed of a mechanical device capable of receiving bidirectional rotating driving performed by manual forces;
- - the kinetic energy of the first driving rotating direction and the inputted kinetic energy of the second driving rotating direction are from human's feet for driving the input end of the manual input device (11);
- - the first driving rotating direction is opposite to the second driving rotating direction;
- - front transmission device (12): the front transmission device (12) is constituted by one or more than one of the following transmission devices, including various gear-type, belt-type or friction-type rotational transmission structures having fixed or variable speed ratios;
The front transmission device (12) is driven by the manual input device (11), and the outputted rotational kinetic energy is served to drive the bidirectional input unidirectional output transmission device (13);
- - bidirectional input unidirectional output transmission device (13): the bidirectional input unidirectional output transmission device (13) is driven by the kinetic energy in various rotating directions from the front transmission device (12) so as to output the kinetic energy in a constant rotating direction for driving the input end of the engaging or releasing operational clutch device (70), and the output end of the engaging or releasing operational clutch device (70) drives the rear transmission device (14), and the output end of the rear transmission device (14) drives the loading wheel set (15), so that when the loading wheel set (15) performs reverse driving in the opposite rotating direction for the purpose of reverse linking, through controlling the engaging or releasing operational clutch device (70) to be released, the bidirectional input unidirectional output driven vehicle having clutch device at load end is provided with a function of lock prevention;
Transmission components which constitute the inside of the bidirectional input unidirectional output transmission device (13) include: (a) a gear set; and/or (b) a friction wheel set; and/or (c) a chain and chain wheel set; and/or (d) a belt and pulley set; and/or (e) a transmission crank and wheel set; and/or (f) a fluid transmission device; and/or (g) an electromagnetic transmission device, or composed of one or more than one of the above;
and the output end of the bidirectional input unidirectional output transmission device (13) drives the engaging or releasing operational clutch device (70);
wherein: when the bidirectional input unidirectional output transmission device (13) performs driving in the first driving rotating direction and the second driving rotating direction of different rotating directions, the speed ratio of the input end to the output end having the constant rotating direction can be the same, different or variable;
The main transmission structure and operation features of the bidirectional input unidirectional output transmission device (13) are as followings:
- - the first rotating direction and the second rotating direction are opposite rotating directions;
- - when driving the input end in the first rotating direction, the output end can be driven through the first transmission wheel system for performing output in the first rotating direction;
- - when driving the input end in the second rotating direction, the output end can be driven through the second transmission wheel system for performing output in the first rotating direction;
- - a unidirectional transmission device is installed between the first transmission wheel system and the second transmission wheel system, when the first transmission wheel system is driven to input in the first rotating direction and output in the first rotating direction, interfere with the second transmission wheel system can be prevented;
- - a unidirectional transmission device is installed between the second transmission wheel system and the first transmission wheel system, when the second transmission wheel system is driven to input in the second rotating direction and output in the first rotating direction, interfere with the first transmission wheel system can be prevented;
- - the output end of the bidirectional input unidirectional output transmission device (13) is served to drive the engaging or releasing operational clutch device (70) formed in the radial or axial direction, so when the loading wheel set (15) performs the reverse driving in opposite rotating direction for the purpose of reverse linking, the engaging or releasing operational clutch device (70) is released, thereby preventing the wheel system with bidirectional input and constant directional output from being in a rigid locking state;
- - engaging or releasing operational clutch device (70): constituted by a mechanism driven by torque or centrifugal force or manual force or pneumatic force or hydraulic force or electromagnetic force for performing engaging or releasing;
- - the rear transmission device (14) is constituted by one or more than one of the following transmission devices, including various gear-type, belt-type or friction-type rotational transmission structures having fixed or variable speed ratios, driven by the output end of the engaging or releasing operational clutch device (70), and the output end thereof is served to drive the loading wheel set (15);
- - loading wheel set (15): driven by the output end of the rear transmission device (14) for driving the vehicle combined with the loading wheel set (15).

7. A bidirectional input unidirectional output driven vehicle having clutch device at load end as claimed in any one of claims 1∼6, wherein a unidirectional transmission device (80) is additionally installed in front of the input end of the engaging or releasing operational clutch device (70) for transferring the rotational kinetic energy to the input end of the engaging or releasing operational clutch device (70).

8. A bidirectional input unidirectional output driven vehicle having clutch device at load end as claimed in any one of claims 1∼6, wherein a unidirectional transmission device (80) is additionally installed in front of the input end of the loading wheel set (15) of the transmission system for transferring the rotational kinetic energy to the input end of the loading wheel set (15).
